# EUROPEAN PATENT APPLICATION

(11) **EP 0 933 603 A1**
(43) Date of publication of application: **04.08.1999**
(21) Application number: 99100698.2
(22) Date of filing: 15.01.1999
(51) Int. Cl.: F25B 1/047, F25B 49/02, H05K 7/20, H01L 23/473

(54) **Cooling system having an inverter for controlling a compressor cooled by a fluid of the system and related process**

(30) Priority: 30.01.1998 IT MI980176
(71) Applicant: RC Group S.p.A., 27010 Valle Salimbene (Pavia) (IT)
(72) Inventor: Caciolli, Rodolfo, 27010 Valle Salimbene (Pavia) (IT)
(74) Representative: Zavattoni, Maria Chiara

(57) **Abstract**

In a cooling system, the compressor is controlled by means of a frequency converter (inverter) (36) on the compressor motor (14). For cooling the inverter, a fluid already present in the system, such as coolant (circuit 40, 44), or cooling fluid for the condenser, or user fluid cooled at the evaporator is used.

## Description

The invention relates to cooling systems, as those used to provide cooling for a user; e.g. for a cold-storage room or an air-conditioning system.

These cooling systems comprise at least, on a circuit for a system cooling fluid or coolant, a compressor, a condenser, a lamination valve and an evaporator. A cooling circuit, wherein a suitable condenser coolant, generally water or air, circulates, cooperates with the condenser to cool the same. The evaporator cools a user circuit, in which a fluid, generally water, circulates for cooling a user equipment or room.

Preferably, reciprocating compressors are used for low levels of power, screw compressors are used for intermediate levels of power, and centrifugal compressors are used for high levels of power.

The screw compressors currently available on the market comprise a pair of screws or a main screw with planetary gears, which, as they turn, translate and compress the coolant gas. This type of compressor is driven by a motor (normally electrical), which may be comprised into the compressor, or the compressor may be coupled to an external motor by means of a coupling.

Since the load in cooling systems is normally very variable, there exists the need to equip cooling compressors with means for reducing their capacity, so as to enable adjustment of the output cooling capacity to the actual requirement. Power reducers, in addition to complicating the compressor from a constructional standpoint, have the effect of reducing the efficiency of the system in terms of energy.

In the case of screw compressors, therefore, adjustment is made by mechanical partializing or choking: the compressor comprises a partializing box, the position of which may be adjusted along the screw/screws, this partializing box limiting the capacity of the compressor. However, this system is costly and far from efficient.

The prior art also comprises so-called "inverters" or frequency converters, which are used in various fields. One drawback of frequency converters is the heat produced, which must be disposed of in some way. Generally, the frequency converter is provided with a casing having fins to enable exchange of heat with the air in the environment. This heat exchange is frequently forced by means of an appropriate fan. This drawback, and the need for cooling, renders the use of the inverter both cumbersome and burdensome. For this reason, the inverter has never been considered convenient for application to a compressor.

One aim of the present invention is to provide an efficient system for regulating the power of a compressor for a cooling system.

Another aim is to create a system as said above that will involve contained investment and running costs.

A further aim is to enable, in an economical and practical way, the use of an inverter to regulate the power of a screw compressor for a cooling system.

The above aims have been achieved with a system as said in Claim 1 and a process as said in Claim 6. A further subject of the invention is a compressor-inverter unit as said in Claim 8, in which a casing of the inverter comprises a cooling coil. New and useful characteristics of the invention are said in the subsequent claims.

In other words, the subject of the invention is a cooling system comprising a circuit for a cooling fluid or coolant, said circuit including a compressor, a condenser, a lamination or expansion valve, an evaporator, said system comprising a control inverter for controlling the compressor, connected to a driving motor for the compressor, further comprising a cooling circuit for the inverter, said cooling circuit for the inverter being supplied by at least one of the fluids circulating in the system; in particular, either the fluid of the coolant circuit, which is drawn off upstream of the lamination valve and returned upstream of the compressor, or else a cooling fluid for the condenser, or again a fluid in a user circuit, which is in heat-exchanging relation with the evaporator.

The new cooling system achieves power regulation of the cooling circuit in an efficient way. Its investment and running costs are relatively low. The overall dimensions and weight of the compressor assembly are limited, and the compressor assembly is simple from a mechanical point of view in that it does not carry any system for controlling cooling capacity. The adjustment of the capacity to the user requirements is achieved by varying the compressor rpm, or rotational speed, by means of the inverter (variation of frequency and voltage sent to the motor of the screw). This variation in capacity will always take place at maximum efficiency of both the motor and the compressor. The invention moreover enables operation with a much higher frequency (as compared to the frequency of the mains supply), such as 100 Hz. With higher frequencies, it is possible to obtain from the same compressor a higher cooling capacity with the same production costs for the compressor.

The invention will be described in greater detail with reference to the attached figures, which show unrestrictive exemplary embodiments thereof, and in which:
Figure 1 is a diagrammatic representation of a cooling system according to the invention;
Figure 2 is a diagrammatic representation of another cooling system according to the present invention;
Figure 3 is a diagrammatic representation of a third type of cooling system according to the invention; and
Figure 4 is a somewhat schematic isometric view of an inverter casing with cooling coil.

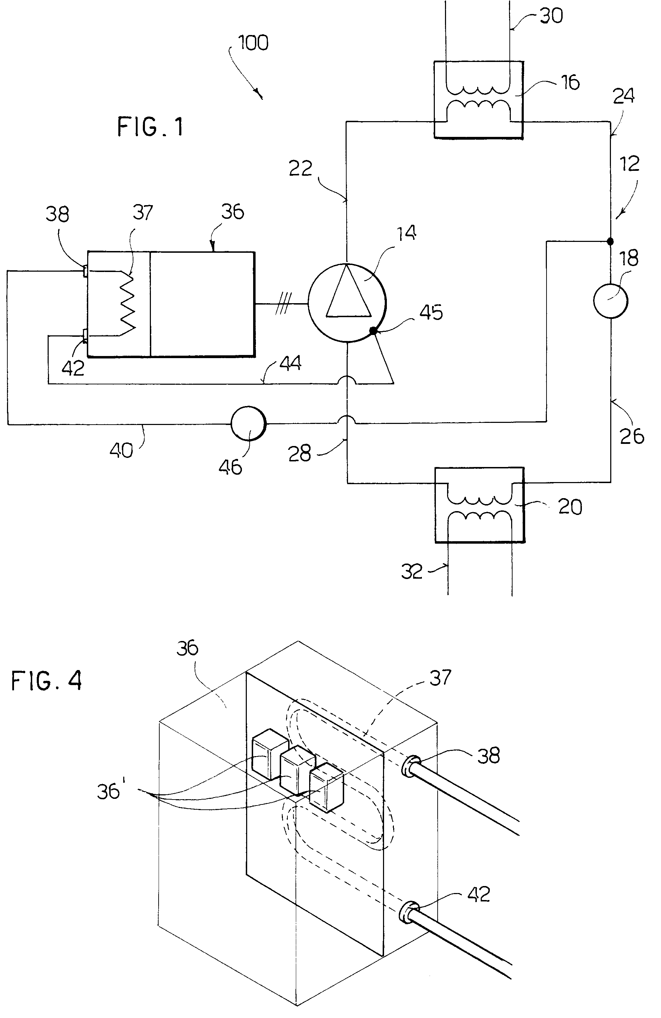

With reference first to Figure 1, a cooling system 100 illustrated therein comprises a coolant circuit 12 for a coolant or cooling fluid, the said circuit comprising a compressor 14, a condenser 16, a lamination valve 18, and an evaporator 20; the circuit further comprising a branch or section 22 of the circuit between the compressor and the condenser, a branch or section 24 of the circuit between the condenser and the lamination valve, a branch or section 26 of the circuit between the lamination valve and the evaporator, and a branch or section 28 of the circuit between the evaporator and the compressor. The condenser 16 is cooled in a known way by means of a condenser cooling fluid, generally water or air, circulating in a circuit referenced 30. The evaporator transfers heat to a user fluid circulating in a user circuit referenced 32.

The compressor is of the screw type (either one or more screws).

According to the invention, the motor driving the shaft of the compressor screw is controlled by an inverter or frequency converter, referenced 36 and illustrated schematically in the attached figures. An inverter body or casing comprises a coil 37, connected through an inlet connection 38 to a feed conduit 40 for supplying cooling fluid for the inverter and through an outlet connection 42 to a return conduit for the cooling fluid for the inverter.

The conduit 40 is connected to the portion 24 of the cooling circuit upstream of the lamination valve 18 and downstream of the condenser 16, and comprises a lamination valve 46 of the coolant for the inverter.

The conduit 44 is connected between outlet connection 42 and an inlet connection 45 of compressor 14.

In this way, for cooling the inverter, the fluid in the coolant circuit, in particular coolant gas, is used, which is taken in liquid form from the coolant circuit and is expanded through lamination valve 46, is passed through coil 37, and is taken back into the coolant circuit upstream of the compressor.

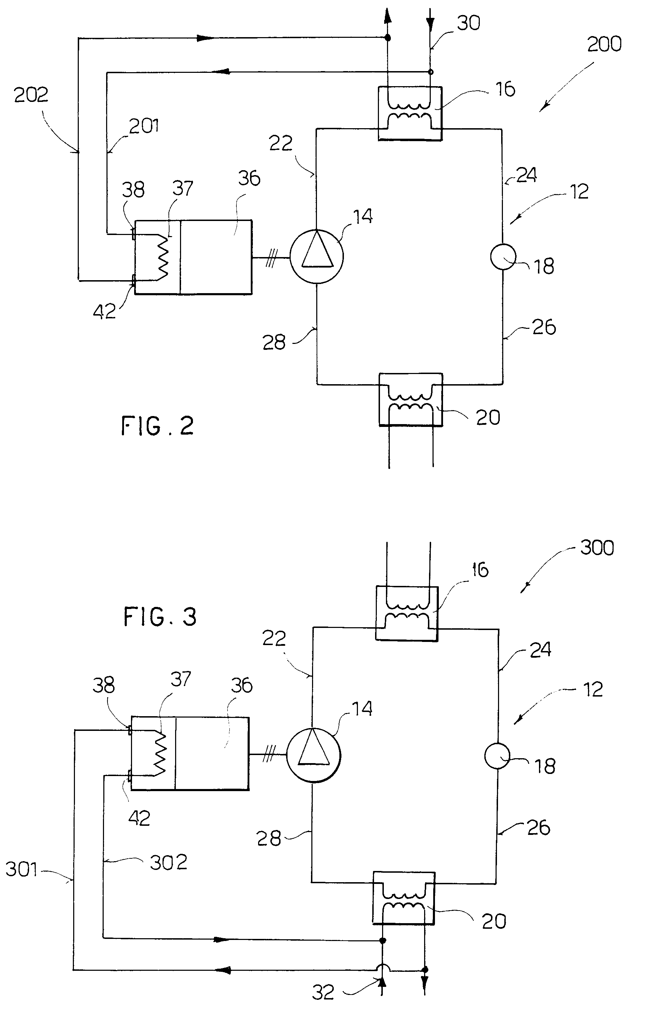

In the embodiment shown in Figure 2 the same reference numbers are used for the same parts as in Figure 1 as far as possible, and said parts will not be described again. In the cooling system 200 in Figure 2, the cooling of the inverter is obtained by means of the cooling fluid for the condenser, which circulates in the condenser cooling circuit 30.

In particular, the system 200 comprises a conduit 201 between an inlet branch of circuit 30 and the inlet connection 38 of coil 37 of the inverter, and a conduit 202 between the outlet connection 42 from the inverter and an outlet branch of the circuit 30 leaving the condenser.

In the modified embodiment of system referenced 300 in Figure 3 (in which the same references as in the previous figures refer to corresponding elements), the cooling of the inverter is achieved by means of the user fluid. In particular, a feed conduit 301 is shown connected between a delivery section of user circuit 32 and inlet connection 38, and a return conduit 302 is shown between outlet connection 42 and a return section of user circuit 30.

However, the use of the user fluid for cooling the inverter also allows other forms of connection not illustrated herein.

Figure 4 shows in schematic form the inverter 36, represented as having a parallelepipedal casing, which comprises at the front a coil element 37, with the inlet connection 38 and the outlet connection 42. The items 36' are the parts of the inverter that must be cooled and are more exposed to the coil 37. It is to be noted that, although the term "coil" has been used herein, this is not to be understood as in any way limiting the invention, in that also other equivalent cooling means are included, such as a chamber supplied with a fluid.

## Claims

1. Cooling system comprising a coolant circuit having a compressor (14), a condenser (16), a lamination valve (18), an evaporator (20), characterized in that the compressor (14) is a screw compressor and in that the system further comprises a frequency converter or "inverter" (36) for regulating the power of said compressor and for increasing the rpm with respect to the rpm allowed by the mains supply frequency.

2. Cooling system according to Claim 1, characterized in that it comprises an inverter cooling circuit (40, 44; 201, 202; 301, 302) for cooling the inverter, said inverter cooling circuit being supplied with a fluid taken from among: a coolant from the coolant circuit (12) a cooling fluid from a circuit (30) for cooling the condenser, a cooling fluid from a user circuit (32).

3. Cooling system according to Claim 2, characterized in that the inverter cooling circuit comprises an inlet conduit (40) connected to a branch (24) of the coolant circuit between the condenser and the lamination valve and a return conduit (44) connected to the upstream side of the compressor, the inlet conduit having a lamination valve (46).

4. Cooling system according to Claim 2, characterized in that the inverter cooling circuit comprises an intake conduit (201) connected to the inlet of the circuit (30) for cooling the condenser and an outlet conduit (202) connected to the outlet of the circuit (30) for cooling the condenser.

5. Cooling system according to claim 2, characterized in that the inverter cooling circuit comprises a feed conduit (301) connected to a delivery section of the user circuit (32) and a return conduit (302) connected to a return section of the user circuit (32).

6. Cooling process for cooling an inverter (36) controlling a compressor (14) of a cooling system, characterized in that it comprises the step of taking a fluid from said cooling system for cooling the inverter.

7. Cooling process according to Claim 6, characterized in that the fluid used for cooling the inverter is one of the following: coolant, fluid for cooling the condenser of the cooling system and fluid of the user circuit.

8. Compressor-inverter unit, characterized in that it comprises a coil (37) for cooling the inverter, with connections (38, 42) to a fluid circuit.
